(19) **Europäisches Patentamt / European Patent Office / Office européen des brevets**

(11) **EP 2 248 071 B1**

(12) **FASCICULE DE BREVET EUROPEEN**

(45) Date de publication et mention
de la délivrance du brevet:
**12.03.2014 Bulletin 2014/11**

(21) Numéro de dépôt: **08866899.1**

(22) Date de dépôt: **19.12.2008**

(51) Int Cl.:
***G06K 9/00*** (2006.01)

(86) Numéro de dépôt international:
**PCT/EP2008/068121**

(87) Numéro de publication internationale:
**WO 2009/083517 (09.07.2009 Gazette 2009/28)**

(54) **IDENTIFICATION BASEE SUR DES DONNEES BIOMETRIQUES CHIFFREES.**

IDENTIFIKATION AUF DER BASIS VON VERSCHLÜSSELTEN BIOMETRISCHEN DATEN

IDENTIFICATION BASED ON ENCRYPTED BIOMETRIC DATA

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.12.2007 FR 0760300**

(43) Date de publication de la demande:
**10.11.2010 Bulletin 2010/45**

(73) Titulaire: **MORPHO**
**92130 Issy Les Moulineaux (FR)**

(72) Inventeurs:
• **KINDARJI, Bruno**
**F-75015 Paris (FR)**
• **CHABANNE, Hervé**
**F-75015 Paris (FR)**
• **BRINGER, Julien**
**F-75015 Paris (FR)**

(74) Mandataire: **Cabinet Plasseraud**
**52, rue de la Victoire**
**75440 Paris Cedex 09 (FR)**

(56) Documents cités:
• **GOH, EU-JIN: "Secure Indexes"[Online] 5 mai 2004 (2004-05-05), XP002490169 Extrait de l'Internet: URL:http://crypto.stanford.edu/~eujin/pape rs/secureindex/secureindex.pdf> [extrait le 2008-07-29]**
• **EREZ SHMUELI ET AL: "Designing Secure Indexes for Encrypted Databases" DATA AND APPLICATIONS SECURITY XIX; [LECTURE NOTES IN COMPUTER SCIENCE;;LNCS], SPRINGER-VERLAG, BERLIN/HEIDELBERG, vol. 3654, 21 août 2005 (2005-08-21), pages 54-68, XP019013760 ISBN: 978-3-540-28138-2**
• **EUN-KYUNG RYU ET AL: "Efficient Conjunctive Keyword-Searchable Encryption" ADVANCED INFORMATION NETWORKING AND APPLICATIONS WORKSHOPS, 2007, AINAW '07. 21ST INTERNATIONAL CONFERENCE ON, IEEE, PISCATAWAY, NJ, USA, 1 mai 2007 (2007-05-01), pages 409-414, XP031110147 ISBN: 978-0-7695-2847-2**
• **BLOOM B H: "Space/time trade-offs in hash coding with allowable errors" COMMUNICATIONS OF THE ACM USA, vol. 13, no. 7, juillet 1970 (1970-07), pages 422-426, XP002490170 ISSN: 0001-0782**

EP 2 248 071 B1

**Description**

La présente invention concerne un contrôle d'identité basé sur des données biométriques stockées dans une base de données, et plus particulièrement, lorsque ces données sont stockées sous une forme chiffrée.

Les systèmes d'identification basés sur des données biométriques comprennent en général une entité de contrôle qui a accès à une base de données contenant des données biométriques sur la base desquelles l'entité de contrôle est en mesure d'identifier une personne.

Les données biométriques stockées dans cette base de données sont issues d'une phase d'apprentissage (ou 'enrollment' en anglais), au cours de laquelle une partie d'un être humain, telle que par exemple des empreintes ou l'iris, est captée sous la forme de données numériques biométriques pour être enfin stockée dans la base de données et être utilisée en tant que données de référence pour effectuer une identification d'une personne.

En effet, lorsque l'entité de contrôle reçoit de nouvelles données biométriques, elle est alors en mesure de déterminer l'identification de la personne à qui sont associées ces nouvelles données sur la base de comparaison entre ces données biométriques reçues et les données biométriques de référence stockées dans la base de données.

Il convient de noter qu'il est en général important que de telles données biométriques restent confidentielles, afin de pouvoir protéger la vie privée des personnes auxquelles sont associées ces données.

Ainsi, il peut être prévu à cet effet de stocker ces données biométriques sous une forme chiffrée dans la base de données.

Toutefois, dans ce cas, l'étape de comparaison consistant à comparer des données biométriques reçues depuis une entité de contrôle avec des données biométriques stockées dans la base de données peut alors s'avérer beaucoup plus complexe que dans le cas où ces données biométriques sont stockées dans la base de données sans chiffrement.

On peut alors imaginer que pour faire cette recherche dans la base de données, il soit nécessaire de déchiffrer les données biométriques qui y sont stockées. Mais une étape de déchiffrement est susceptible de fortement grever l'efficacité d'une telle recherche dans la base de données, ainsi que de limiter la sécurité finale.

D'un autre côté, on connait des systèmes de recherche adaptés pour effectuer des recherches dans une base de données comprenant des données cryptées.

En effet, il existe des cryptosystèmes, ou 'searchable encryption' en anglais, tel que celui décrit dans le document D. Boneh, G. Di Crescenzo, R. Ostrovsky et G. Persiano, Public Key Encryption with Keyword Search, EUROCRYPT 2004, qui permettent de faire une recherche dans une base de données chiffrées en utilisant des mots clés qui, eux, sont déterminés sur la base des mêmes données mais sous leur forme non chiffrée. Un tel système peut être avantageux notamment pour gérer l'archivage d'e-mails par exemple. De telles recherches basées sur des mots clés évitent de procéder à une recherche exhaustive dans la base de données considérée et permettent d'augmenter l'efficacité de la recherche.

Il pourrait alors être intéressant d'utiliser de tels systèmes dans le contexte de l'identification basée sur des données biométriques chiffrées.

Toutefois, l'application de ce type de système pour effectuer des recherches par mots clé dans une base de données biométriques chiffrées peut s'avérer erronée si l'on ne procède pas au déchiffrage des données stockées.

En effet, il est possible, et même très probable, que les données biométriques obtenues dans une phase d'enrôlement diffèrent substantiellement des données biométriques qui sont obtenus pour une même personne par la suite lors d'une phase d'identification. Dans un tel contexte, il est alors possible que les résultats obtenus par application des principes des cryptosystèmes ci-dessus ne soient pas pertinents.

Dans un article daté du 5 mai 2004 et intitulé Secure Indexes (disponible à l'adresse crypto.stanford.edu/-eujin/papers/secureindex/secureindex.pdf), Eu-Jin Goh décrit un index sécurisé et formule un modèle de sécurité pour les index, connu sous le nom de sécurité sémantique contre une attaque adaptative à mot clé choisi (dont l'acronyme est ind-cka). L'auteur décrit une construction d'index appelée z-idx. L'auteur la présente comme une construction efficace et sécurisés contre ind-cka. Cette construction utilise des fonctions pseudo aléatoires et des filtres de Bloom. L'article ne concerne pas la biométrie.

Le document Public Key encryption that allows PIR queries (Dan Boneh et al. 2007) divulgue un système de recherche adapté pour effectuer des recherches dans une base de données comprenant des données cryptées.

La présente invention vise à améliorer la situation.

Un premier aspect de la présente invention propose un procédé de gestion d'une base de données comprenant des données biométriques stockées sous forme chiffrée ;

ladite base de données comprenant un ensemble de filtres d'indexation associés respectivement à des identifiants de filtre ;

ledit procédé comprend les étapes suivantes au niveau d'une entité de gestion :

/1/ recevoir une donnée biométrique ;

/2/ stocker, à une adresse donnée dans la base de données, ladite donnée biométrique sous une forme cryptée ;

/3/ obtenir des mots clés à partir d'un premier ensemble de fonctions de hachage et de ladite donnée biométrique, les fonctions de hachage du premier ensemble ayant chacune pour caractéristiques de fournir pour des valeurs d'entrée voisines dans un espace métrique, des valeurs très voisines, préférablement une même valeur, en sortie dans un second espace métrique;

/4/ associer un sous ensemble de filtres à chaque mot clé en sélectionnant, pour chaque mot clé, des filtres en fonction des identifiants de filtre respectivement associés, desdits mot clé et d'un second ensemble de fonctions de hachage ; et

/5/ associer ladite adresse donnée sous forme cryptée à chacun des filtres du sous ensemble de filtres.

On entend par la suite par les termes 'filtre d'indexation', un filtre permettant de représenter des relations entre des données par association à des index de filtres, comme par exemple les filtres de Bloom.

La base de données est donc structurée ici sur la base de filtres. Ces filtres sont initialement vides. Puis, au fil des réceptions de données biométriques à enregistrer, ils sont mis à jour.

Avantageusement, cette mise à jour est effectuée de telle sorte que les filtres considérés sont respectivement associés à des mots clés qui sont obtenus à partir de la donnée biométrique reçue.

En procédant ainsi, on obtient une base de données dans laquelle il est possible de faire des recherches par mot clé sur la base de données stockées sous forme cryptée, sans avoir à faire une recherche exhaustive dans la base de données.

En effet, grâce à ces dispositions, on associe dans cette base de données, via la structure des filtres, au moins une donnée biométrique à un sous ensemble de filtres.

En outre, les mots clés qui sont respectivement associés à l'ensemble des filtres sont avantageusement issus de la donnée biométrique reçue. Il n'est donc nul besoin de stocker ces mots clés de recherche pour effectuer ensuite des recherches ultérieures dans la base de données ainsi construite.

En effet, lorsqu'une recherche dans une telle base de données est requise, il suffit de déterminer les mots clé correspondant à la recherche par application d'une famille de fonctions de hachage sur la donnée biométrique à contrôler.

Dans un mode de réalisation de la présente invention, l'étape /3/ est mise en oeuvre selon les étapes suivantes :

- obtenir des premières valeurs hachées respectives par application du premier ensemble de fonctions de hachage à la donnée biométrique ;
- obtenir lesdits mots clé en combinant lesdites premières valeurs hachées respectivement avec des identifiants respectifs des fonctions de hachage du premier ensemble.

En procédant ainsi, on est en mesure de déterminer des mots clés à partir de fonctions de hachage utilisées et d'une donnée biométrique. De préférence, ces fonctions de hachage du premier ensemble ont chacune pour caractéristiques de fournir pour des valeurs d'entrée voisines dans un espace métrique, des valeurs très voisines, préférablement une même valeur, en sortie dans un second espace métrique.

En procédant ainsi, on prépare une base de données adaptée à une recherche sur la base de mots clé qui peuvent être de valeurs variables, autour de la donnée biométrique considérée. Autrement dit, une recherche dans cette base de données adaptée pour certains mots clés peut être faite sur des mots clés qui n'ont pas tout à fait les mêmes valeurs mais qui ont des valeurs voisines. Ainsi, une telle base de données cryptées est adaptée à la recherche de mots clés issues de données biométriques qui peuvent présenter des valeurs différentes entre deux captures distinctes de données biométriques.

Dans un mode de réalisation de la présente invention, l'étape /4/ est mise en oeuvre selon les étapes suivantes :

- obtenir des secondes valeurs hachées par application du second ensemble de fonctions de hachage respectivement aux mots clé ;
- obtenir le sous ensemble de filtres d'indexation, en sélectionnant chaque filtre auquel est associé un identifiant de filtre qui correspond auxdites secondes valeurs hachées.

En procédant ainsi, on construit une base de données adaptée pour une recherche sur la base de mots clés, les relations entre les mots clés et les données biométriques étant représentés sous la forme de filtres. Ce second ensemble de fonctions de hachage appliquées aux mots clés permet de répartir la représentation des mots clés sur différents filtres. Ce second ensemble de fonctions de hachage peut correspondre à des fonctions de hachage de type cryptographique, de façon à obtenir une répartition avantageuse.

On peut prévoir qu'une première et une seconde famille de fonctions de hachage sont initialement déterminées, les premier et second ensembles de fonctions de hachage étant une sous partie desdites première et seconde famille de fonctions de hachage respectivement.

L'étape /4/ peut être mise en oeuvre en outre sur la base d'un seuil de tolérance d'erreur. Dans un mode de réalisation de la présente invention, il peut être avantageux de prendre en considération à la base de l'obtention des mots clés, non seulement les premières valeurs hachées mais en outre des valeurs voisines de ces valeurs hachées. Tel est le cas, notamment, lorsqu'on utilise des fonctions de hachage du premier ensemble de fonctions de hachage du type de celles décrites dans un document 'Efficient search for approximate nearest neighbor in high dimensional spaces' de Eyal Kushilevitz, Rafail Ostrovsky et Yuval Rabani.

Le premier ensemble de fonctions de hachage peut être de type LSH, par exemple comme cela est décrit dans le document de P. Indyk et R. Motwani, 'Approximate Nearest Neighbors: Towards Removing the Curse of Dimensionality', STOC 1998, et le second ensemble de fonctions de hachage peut être de type cryptographique.

Avantageusement les filtres de l'ensemble de filtres peuvent être des filtres de Bloom, tels que définis dans 'Space/time trade-offs in hash coding with allowable errors' de Burton H. Bloom de 1970. Ils permettent d'encoder une propriété d'appartenance à un ensemble tout en optimisant l'espace de stockage, de manière probabiliste.

Un deuxième aspect de la présente invention propose un procédé d'identification de donnée biométrique dans une base de données gérée selon un procédé de gestion selon le premier aspect de la présente invention ;

ladite base de données comprenant une structure basée sur des filtres $(B_1,...,B_n)$ ;

ledit procédé comprenant les étapes suivantes au niveau d'une entité d'identification qui a accès à la base de données :

/i/ recevoir une requête indiquant des mots clé hachés ;

/ii/ dans la base de données (10), déterminer des filtres associés auxdits mots clé hachés ;

/iii/ obtenir une liste d'adresses sous forme cryptée de la base de données qui sont respectivement associées auxdits filtres déterminés ;

/iv/ décider que les mots clés ont une correspondance dans la base de données, lorsqu'une même adresse de ladite liste d'adresses est associée à au moins un nombre déterminé de filtres.

Avantageusement ici, on exploite la base de données gérée selon le premier aspect de la présente invention, en faisant une recherche à l'aide de mots clés basée sur des propriétés de la structure de filtres de cette base de données, c'est-à-dire notamment des filtres d'indexation.

Le nombre déterminé de filtres peut être choisi en fonction du taux d'erreurs que l'on décide de tolérer.

On peut avantageusement prévoir que les mots clé hachés sont reçus depuis un émetteur au niveau de l'entité d'identification ;

ledit émetteur ayant obtenu le mot clé haché selon les étapes suivantes :

- capter une donnée biométrique ;
- obtenir des valeurs hachées par application d'un troisième ensemble de fonctions de hachage respectivement sur ladite donnée biométrique captée ;
- obtenir les mots clé en combinant lesdites premières valeurs hachées respectivement avec des identifiants respectifs des fonctions de hachage du troisième ensemble ; et

- obtenir les mots clé hachés en appliquant un quatrième ensemble de fonctions de hachage auxdits mots clé.

En procédant ainsi, au niveau de l'émetteur, les mots clé utilisés pour la recherche sont obtenus à partir d'une nouvelle donnée biométrique captée. Il convient donc de noter ici que les mots clés utilisés pour la recherche dans une base de données selon un mode de réalisation de la présente invention ne sont pas stockés mais sont obtenus à partir de données biométriques captées, soit au moment de l'enrôlement afin de construire la base de données, soit au moment d'une identification de donnée biométrique.

Les premier et troisième ensembles de fonctions de hachage peuvent être issus d'une première famille de fonctions de hachage et les deuxième et quatrième ensembles de fonctions de hachage peuvent être issus d'une seconde famille de fonctions de hachage.

On peut noter qu'il peut être avantageux de prévoir d'appliquer un plus grand nombre de fonctions de hachage issues des première et seconde familles de fonctions de hachage au moment de l'enrôlement que le nombre de fonctions de hachage issues des première et seconde familles de fonctions de hachage appliquées au moment d'une identification.

Un troisième aspect de la présente invention propose une entité de gestion de base de données adaptée pour la mise en oeuvre d'un procédé de gestion selon le premier aspect de la présente invention.

Un quatrième aspect de la présente invention propose une entité d'identification adaptée pour la mise en oeuvre d'un procédé d'identification selon le deuxième aspect de la présente invention.

Un cinquième aspect de la présente invention propose un système d'identification comprenant une entité de gestion de base de données selon le troisième aspect de la présente invention; une base de données et une entité d'identification selon le quatrième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre les principales étapes d'une gestion de base de données selon un mode de réalisation de la présente invention ;
- la figure 2 illustre un système d'identification selon un mode de réalisation de la présente invention ;
- la figure 3 illustre une phase d'enrôlement selon un mode de réalisation de la présente invention ;
- la figure 4 illustre une phase d'identification selon un mode de réalisation de la présente invention.

Dans le contexte de la présente invention, on entend par les termes 'données biométriques' des données de l'être humain qui permettent de l'identifier. Ces données biométriques sont en général obtenues par un capteur. Un tel capteur peut donc être adapté pour capter des données biométriques d'empreinte, d'iris, de visage, de graphologie ou encore de signature vocale par exemple.

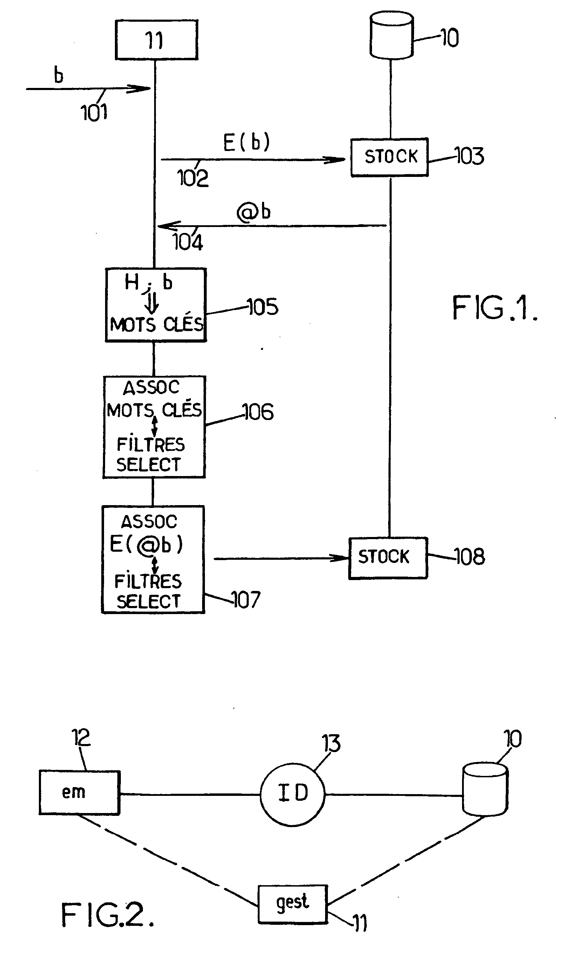

La figure 1 illustre les principales étapes d'un procédé de gestion de base de données selon un mode de réalisation de la présente invention.

Une entité de gestion 11 est en charge de gérer une base de données 10 adaptée pour stocker des données biométriques cryptées de sorte à permettre une recherche par mots clé selon un mode de réalisation.

L'entité de gestion 11 reçoit un message comprenant une donnée biométrique b à stocker dans la base de données sous forme cryptée en tant que donnée de référence pour des recherches ultérieures d'identification.

Cette donnée biométrique b est cryptée au niveau de l'entité de gestion 11 en une donnée biométrique cryptée E(b), à l'aide par exemple d'une clé publique.

Ensuite cette donnée biométrique cryptée E(b) est transmise à la base de données 10 par un message 102. Cette dernière stocke cette donnée cryptée en une étape 103 et renvoie un message 104 à l'entité de gestion 11 indiquant l'adresse de stockage @b de la donnée biométrique cryptée.

A une étape 105, au niveau de l'entité de gestion 11, on obtient des mots clés sur la base d'un premier ensemble de fonctions de hachage $h_\alpha$, pour $\alpha$ entier compris entre 1 et $\mu$, et de la donnée biométrique b. Ainsi, à cette étape, on peut prévoir d'appliquer les fonctions de hachage $h_\alpha$ du premier ensemble sur la donnée biométrique b. On obtient alors $\mu$ valeurs hachées notées $c_\alpha$ et vérifiant :

$$c_\alpha = h_\alpha\ (b)$$

Une telle étape de construction de la base de données permettra donc de reconnaitre que deux données biométriques, dont une est une donnée biométrique cryptée de référence dans la base de données, proviennent d'une même personne, même si ces deux données biométriques sont substantiellement différentes.

Puis, on peut prévoir de combiner ces valeurs $c_\alpha$ avec la valeur $\alpha$, par exemple en concaténant $\alpha$ à la valeur $c_\alpha$. La valeur issue d'une telle concaténation est ensuite notée $c_\alpha//\ \alpha$. A l'issue d'une telle étape, on dispose alors de $\mu$ mots clé associés à la donnée biométrique b.

A une étape 106, on prévoit alors d'associer à chacun de ces mots clé un sous ensemble de filtres d'indexation. Pour constituer le sous ensemble de filtres d'indexation à associer à chacun de ces mots clés, on peut sélectionner des filtres dans l'ensemble de filtres en fonction des identifiants de filtre associés, des mots clés et d'un second ensemble de fonctions de hachage $h'_\beta$, pour $\beta$ compris entre 1 et v.

A cet effet, on peut prévoir de sélectionner, à l'étape 107, les filtres qui ont un identifiant correspondant aux valeurs hachées obtenues par application du second ensemble de fonction de hachage aux mots clé. Ainsi, on associe l'adresse de la donnée biométrique aux filtres $B_i$ qui ont les identifiants i vérifiant :

$$i = h'_\beta\ (h_\alpha\ (b)\ //\ \alpha)$$

Puis, à l'étape 108, dans le sous ensemble des filtres sélectionnés on stocke l'adresse de la donnée biométrique b sous une forme cryptée E(@b). On associe ainsi la donnée biométrique b au sous ensemble de filtres d'indexation.

Dans un mode de réalisation de la présente invention, il est prévu d'utiliser des filtres de type Bloom. Les sections suivantes sont relatives à ce type de filtres.

Soit un ensemble D de taille relativement élevée, par exemple tel que l'ensemble des mots binaires, et S un sous-ensemble de cet ensemble D de taille l, entier positif. Par construction de ce type de filtre, on peut tester si un élément x appartient à l'ensemble S de manière probabiliste. On peut noter qu'il est possible que quelques réponses positives soient fausses. Toutefois, dans le contexte des filtres de Bloom il n'est pas possible que des réponses d'appartenance négatives soient fausses. Grâce à cette composante probabiliste, on peut ainsi obtenir une structure plus compacte qu'une simple table de correspondance.

On considère une famille de k fonctions de hachage h, k entier positif, définies sur l'ensemble D et à valeurs d'arrivée dans l'ensemble des entiers compris entre 1 et m.

Dans ces conditions, un filtre (k;m) de Bloom associé correspond à une famille d'éléments binaires (B1, ..., Bm), initialement initialisés à la valeur 0, définie comme suit :

pour tout i entier compris entre 1 et l et j compris entre 1 et k, on définit :

$$B_{h_j(a_i)} = 1$$

où S est constitué des éléments $a_i$ pour i entier compris entre 1 et l.

Dans ce contexte, pour vérifier si un élément x appartient à S, il suffit alors de vérifier que pour tout j entier compris entre 1 et k, l'équation suivante est vérifiée :

$$B_{h_j(x)} = 1.$$

La probabilité de réponse positive fausse peut alors être négligeable, pour un choix de m et k qui dépend de l.

Les filtres de Bloom peuvent avantageusement s'appliquer à un contexte de stockage dans un mode de réalisation de la présente invention. On cherche à associer un ensemble de valeurs à chaque élément de S. Ici, lors de la gestion de la base de données, on cherche à associer un ensemble d'identifiants de filtre à chaque mot clé obtenu à partir d'une donnée biométrique selon un mode de réalisation de la présente invention.

Pour cela, il est proposé dans le document « Public key encryption that allows PIR queries » de D. Boneh, E. Kushilevitz, R. Ostrovsky, (Alfred Menezes, editor, CRYPTO, volume 4622, pages 50-67. Springer, 2007) une construction de filtre de Bloom avec stockage.

Soit V un ensemble de valeurs et R une relation associant les éléments *v* de l'ensemble V aux éléments de l'ensemble S.

Les filtres (B1; .... ;Bm) sont tous initialisés à l'ensemble vide puis mis à jour comme suit:

pour tout i entier compris entre 1 et l, où l est un entier représentant la taille de l'ensemble S, pour tout j entier compris entre 1 et k, et pour tout *v* élément de l'ensemble V tel que *v* à une relation R avec $a_i$, alors on associe l'élément *v* au filtre $B_{h_j(a_i)}$. Ainsi, si l'ensemble X, inclus dans l'ensemble V, est associé à un élément $a_i$ de S alors on a, pour tout j entier compris entre 1 et k, l'ensemble X qui est inclus dans le filtre $B_{h_j(a_i)}$.

On a alors, avec une probabilité élevée, le fait qu'un élément a est élément de S si et seulement si le résultat de l'intersection de tous les filtres $B_{h_j(a)}$ pour j compris entre 1 et k, est non vide.

Dans un mode de réalisation de la présente invention, il est prévu d'appliquer une ou même plusieurs familles de fonctions LSH (pour 'Locality Sensitive Hashing' en anglais) en entrée de tels filtres de Bloom.

Une fonction LSH est une fonction de hachage qui a pour caractéristique de fournir un résultat similaire quand elle est appliquée à des points qui sont voisins dans un espace métrique. Une telle fonction est notamment définie dans le document 'Approximate nearest neighbors :Towards removing the cruse of dimensionality' de P. Indyk et R. Motwani, STOC 1998.

Soit B un espace métrique, U un ensemble de valeurs d'arrivée des fonctions de hachage de la famille considérée, r1 et r2 deux nombres réels vérifiant :

$$r1 < r2$$

soit p1 et p2 appartenant à l'ensemble [0, 1] et vérifiant :

$$p1 > p2$$

Soit une famille H de fonctions de hachage $h_1, ..., h_\mu$.

Toute fonction $h_i$, pour i compris entre 1 et $\mu$, allant de B vers U, est une fonction (r1, r2, p1, p2)-LSH, si pour toute fonction $h_i$ dans la famille H, et pour tout élément a et b de l'ensemble B, on a :

si

$$d_B(a,b) < r1, \text{ alors } Pr[h_i(a) = h_i(b)] > p1$$

et
si

$$d_B(a,b) > r2, \text{ alors } Pr[h_i(a) = h_i(b)] < p2$$

où $d_B(a,b)$ est la distance entre a et b éléments de B dans l'espace métrique B.

On peut par exemple prendre une famille H de fonctions LSH correspondant à l'ensemble de toutes les projections canoniques dans l'espace de Hamming $\{0, 1\}^n$.

Dans ce cas, chaque fonction $h_i$ fait correspondre une valeur $x_i$ à un ensemble de valeurs $(x_1, ..., x_n)$.

Puis pour tous r1 et r2 appartenant à l'ensemble des entiers compris entre 1 et n, et vérifant :

$$r1 < r2,$$

les fonctions $h_i$ sont dites des fonctions $(r_1, r_2, 1-r_1/n, 1-r_2/n)$-LSH.

On peut également avantageusement prévoir dans le contexte de la présente invention de mettre en oeuvre une famille de fonctions LSH telle que celle qui a été proposée dans le document "Efficient search for approximate nearest neighbor in high dimensional spaces'.

Ici, donc, B est l'ensemble de tous les n-uplets de $\{0, 1\}^n$ et le vecteur à hacher est noté :

$$x = (x1, ... xn) \text{ dans B.}$$

La construction est basée sur des vecteurs aléatoires de poids choisis. Ainsi, on prend $\beta$ dans l'ensemble [0, 1] et on construit un vecteur aléatoire r de B de telle sorte que chaque coordonnée de r est égale à 1 avec une probabilité $\beta$.

La fonction de hachage $h_r$ induite alors peut être définie comme suit :

$$h_r : x \rightarrow h_r(x) = \sum_{i=1}^{n} x_i . r_i$$

Puis, on choisit un nombre t de vecteurs $r_1$ à $r_t$ pour obtenir une fonction de hachage h telle que :

$$h = (h_{r1}, ..., h_{rt}) : B \rightarrow \{0,1\}^t$$

Ainsi, soit x un élément de B, et r1, ... rt des éléments de B, correspondant à des vecteurs aléatoires vérifiant que chaque bit d'un de ces éléments ait été généré de manière aléatoire avec une probabilité de $\beta$.

Il existe alors un nombre $\delta_1$ positif tel que pour tout $\varepsilon$ positif, a et b éléments de B, deux éléments de la base de données tels que :

$$d_B(x,a) \leq l$$

et

$$d_B(x,b) > (1+\varepsilon).l$$

où $l=1/2\beta$,
il existe alors une constante $\delta_2$ telle que :

$$\delta_2 = \delta_1 + \delta$$

où $\delta$ est positif et dépendant seulement de la valeur de $\varepsilon$ pour lequel :

$$\Pr\left[ d_B\left(h(x),h(a)\right) > \frac{(2\delta_1 + \delta_2)}{3}t \right] \leq e^{-\frac{2}{9}\delta^2 t}$$

$$\Pr\left[ d_B\left(h(x),h(b)\right) < \frac{(2\delta_2 + \delta_1)}{3}t \right] \leq e^{-\frac{2}{9}\delta^2 t}$$

Un filtre de Bloom permet d'encoder une propriété d'appartenance à un ensemble tout en optimisant l'espace, de manière probabiliste.

Ici, dans le contexte de la présente invention, on prévoit de baser de tels filtres de Bloom sur des fonctions de hachage de type LSH comme décrites ci-dessus, suivie par des fonctions de hachage de type cryptographique.

Dans un mode de réalisation de la présente invention, il est prévu d'utiliser plus d'espace autour des données biométriques considérées afin de permettre une plus grande tolérance aux erreurs entre deux données biométriques issues respectivement de deux captures différentes mais effectuées sur une même personne.

Plus précisément, pour une famille de fonctions LSH telle que définie ci-dessus et dans le document "Efficient search for approximate nearest neighbor in high dimensional spaces', il est prévu de calculer à partir d'un ensemble de données biométriques captée b, une pluralité d'ensembles réduits de données biométriques $c_1$ à $c_\mu$ tel que pour i compris entre 1 et $\mu$, on a :

$$c_i = h_i(b)$$

Dans ce contexte, par construction de la famille de fonctions utilisées ici, il est possible d'en déduire, avec une probabilité importante, que des ensembles réduits $c_i$ obtenus par la même méthode que celle utilisée pour les ensembles réduits $c_i$, mais à partir d'une nouvelle capture d'une donnée biométrique b', sont respectivement à une distance d des ensembles réduits $c_i$, cette distance d vérifiant :

$$d < \lambda t$$

où $\lambda$ est une constante, inférieure à 1, qui ne dépend que de la première famille de fonctions de hachage H et des erreurs que l'on estime pouvoir tolérer entre l'ensemble de données biométriques b et l'ensemble de données biométriques b'.

Un filtre de Bloom (v, m) est associé à une seconde famille de fonctions de hachage H'={$h_1$', ..., $h_v$'}, cette seconde famille de fonctions de hachage visant à établir une bonne répartition du stockage des données dans les différents filtres de Bloom $B_i$.

Il est alors prévu de déterminer des valeurs hachées de tous les ensembles réduits $c_i$' qui sont à une distance inférieure à $\lambda t$ de $c_i$ par application d'un ensemble de fonctions de hachage de la seconde famille H'.

En procédant ainsi, il est possible d'éviter de fausses réponses négatives lors d'une recherche par mot clé dans la base de données, avec une probabilité élevée.

La figure 2 illustre un système d'identification selon un mode de réalisation de la présente invention. Un tel système d'identification comprend donc une entité de gestion 11, un émetteur 12 qui comprend un capteur de données biométriques, une base de données 10 et une entité d'identification 13.

L'entité de gestion 11 a une interface avec la base de données 10 pour gérer l'enrôlement. Elle peut aussi avoir une interface avec l'émetteur dans le cas où les données biométriques enrôlées proviennent de cet émetteur. Aucune limitation n'est attachée à la source des données biométriques que reçoit l'entité de gestion 11 dans la phase d'enrôlement.

L'entité d'identification 13 est, elle, adaptée pour communiquer avec d'un côté l'émetteur 12 et de l'autre la base de données 10 afin de gérer une phase d'identification.

On peut prévoir soit que les requêtes d'identification basées sur des mots clés selon un mode de réalisation de la présente invention soient directement émises depuis l'émetteur à destination de la base de données 10. A cet effet, on peut donc prévoir également une interface entre l'émetteur 12 et la base de données 10.

Toutefois, dans les sections suivantes, à titre d'exemple, les messages entre l'émetteur et la base de données transitent par l'entité d'identification 13.

Afin d'accroitre le niveau de protection de la confidentialité des échanges au sein de ce système d'identification, on peut avantageusement prévoir d'utiliser des liens de communication sécurisés.

A cet effet, il est possible de prévoir de crypter et de signer tous les échanges effectués entre les entités de ce système. On peut par exemple utiliser les principes de mécanismes d'encryptages tels que ceux décrits dans le document « A public key cryptosystem and a signature scheme based on discrete logarithms » de Taher El Gamal (in CRYPTO, pages 10-18, 1984). On note pour la suite E une fonction d'encryptage associée à ce système et D la fonction de décryptage correspondante.

Il convient de noter que là où est énoncée une fonction de cryptage, respectivement de décryptage, on peut aisément appliquer une fonction de chiffrement, respectivement de déchiffrement.

Par ailleurs, également dans le but d'accroitre le niveau de protection de confidentialité des données manipulées dans ce système, on peut prévoir d'utiliser un protocole de type 'Private Block Retrieval protocol' pour une communication entre la base de données 10 et l'entité de gestion 11 et/ou pour une communication entre la base de données 10 et l'entité d'identification 13, tel que défini dans le document « Private information retrieval » de Benny Chor, Eyal Kushilevitz, Oded Goldreich, Madhu Sudan (J. ACM, 45(6) :965-981, 1998). En procédant ainsi, la base de données 10 n'a accès à aucune information relative à l'utilisateur qui est en cours d'enrôlement ou encore en cours d'identification.

Dans ce système, une capture est effectuée sur un utilisateur au niveau de l'émetteur 12. Puis, la donnée biométrique b' issue de cette capture est transmise à l'entité d'identification 13 qui, elle, requiert auprès de la base de données 10 une reconnaissance ou identification de cette donnée biométrique b' captée.

Si cette donnée biométrique n'est pas reconnue au regard du contenu de la base de données 10, cela signifie que cet utilisateur n'est pas enregistré dans cette base de données et l'émetteur 12 peut en être informé.

Dans ce système, une phase d'enrôlement est gérée au niveau de l'entité de gestion 11, et vise à consigner des données biométriques de référence pour les utilisateurs enregistrés, et une phase d'identification est gérée au niveau de l'entité d'identification 13 et vise à déterminer si un utilisateur est préalablement connu du système, sur la base d'une comparaison entre des données biométriques de référence et des données biométriques nouvellement captées.

Le tableau suivant décrit une structure de la base de données 10 selon un mode de réalisation de la présente invention.

| Filtres | Contenu |
|---------|---------|
| $B_1$ | $\{E(a_{1,1}), ..., E(a_{p1,1})\}$ |
| ... | |
| $B_m$ | $\{E(a_{1,1}), ..., E(a_{pm,m})\}$ |

Les différents filtres correspondent à des filtres de Bloom respectifs qui sont utilisés dans le contexte de la présente invention.

Les éléments $E(a_{i,j})$ contenus dans les filtres $B_1$ à $B_m$ correspondent à des adresses de données biométriques stockées dans la structure du tableau ci-dessous, sous une forme cryptée.

Le tableau suivant décrit la structure du stockage des données biométriques.

| Etiquette | Données |
|-----------|---------|
| $@(b_1)$ | $E(b_1)$ |
| ... | ... |
| $@(b_N)$ | $E(b_N)$ |

Dans un mode de réalisation de la présente invention, on détermine préalablement une première famille de fonctions de hachage H de type LSH et une seconde famille de fonctions de hachage de type cryptographique H'. La connaissance de ces familles est partagée par l'émetteur 12 et l'entité de gestion 11. En revanche, il n'est pas requis que ces familles de fonctions de hachage soient connues au niveau de l'entité d'identification 13.

Les fonctions de hachage utilisées pour la phase d'enrôlement au niveau de l'entité de gestion 13 ne sont pas nécessairement les mêmes que celles utilisées au cours de la phase d'identification au niveau de l'émetteur, mais elles proviennent des deux mêmes familles de fonctions de hachage partagées H et H'. On peut d'ailleurs avantageusement prévoir d'appliquer un plus grand nombre de fonctions de hachage dans la phase d'enrôlement que dans la phase d'identification, afin de permettre de limiter les erreurs à venir au cours d'une identification.

Au cours de la phase d'enrôlement, on détermine un nombre $\mu$ de fonctions de hachage LSH, $h_1$, à

$h_\mu$, allant depuis l'espace B dans l'espace $\{0,1\}^t$ de la première famille de fonctions H.

On détermine également un nombre v de fonctions de la seconde famille H', c'est-à-dire dédiées à un filtre de Bloom avec stockage, notées $h'_1$ à $h'_v$ telles que :

$$\{0,1\}^t \times [1, \mu] \rightarrow [1, m]$$

Initialement, la base de données 10 est vide et les filtres de Bloom $B_j$, pour j compris entre 1 et m, sont initialisés à l'ensemble vide.

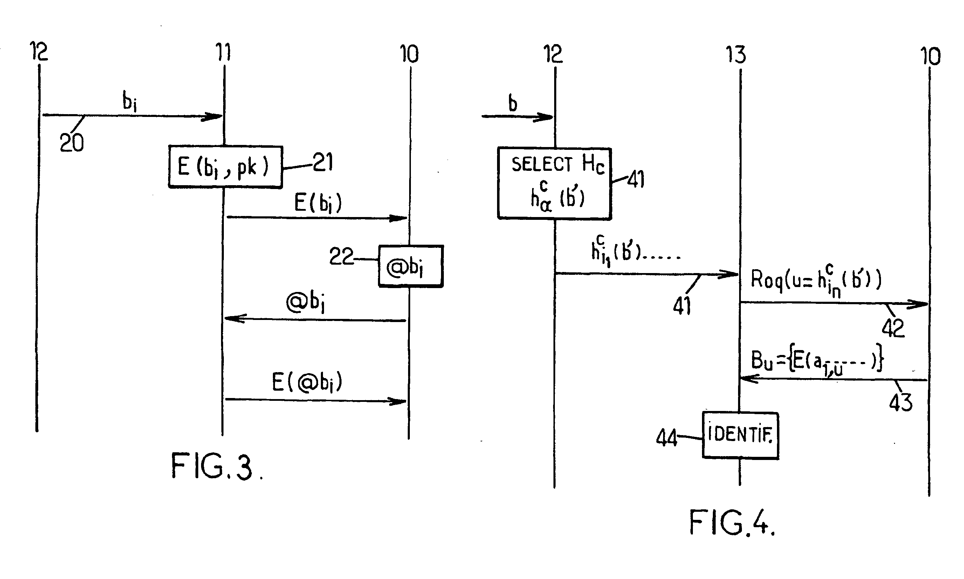

La figure 3 illustre une telle phase d'enrôlement selon un mode de réalisation de la présente invention.

Chaque utilisateur du système fournit un ensemble de données biométriques $b_i$ captées à l'entité de gestion 11 qui est adaptée pour gérer la base de données. Aucune limitation n'est attachée à la méthode utilisée pour effectuer une telle étape. On peut notamment prévoir que cette étape soit réalisée par l'émetteur 12, via l'entité de gestion 11.

Puis, l'entité de gestion 11 crypte $b_i$, à l'étape 21, à l'aide de la fonction de cryptage E et d'une clé pk associée à l'entité de gestion 11. L'ensemble de données ainsi crypté noté $E(b_i)$ est stocké dans la base de données 10.

La base de données 10 est ainsi remplie avec des ensembles de données biométriques cryptées $E(b_i)$ respectivement stockées à des adresses $@b_i$ dans la base de données à l'étape 22.

Puis, les adresses $@b_i$ sont transmises depuis la base de données 10 à l'entité de gestion 11.

Sur la base de ces adresses $@b_i$, l'entité de gestion est alors en mesure de mettre à jour les filtres de Bloom qui sont stockés dans la structure telle que décrite ci-dessus dans la base de données 10.

A cet effet, l'entité de gestion 11 calcule des valeurs $c_\alpha$ pour tout $\alpha$ entier compris entre 1 et $\mu$, selon l'équation suivante :

$$c_\alpha = h_\alpha(b_i)$$

Lorsqu'on utilise des fonctions de hachage de type de celles définies dans le document 'Efficient search for approximate nearest neighbor in high dimensional spaces' ci-avant cité, on peut avantageusement prévoir une étape supplémentaire pour obtenir les mots clé.

Cette étape supplémentaire consiste à déduire des ensembles $C_\alpha$ correspondants selon l'équation suivante :

$$C_\alpha = c_\alpha + \left\{ e \in \{0,1\}^t \right\}$$

où e est un vecteur de $\{0,1\}^t$ de longueur t comprenant un nombre de 1 inférieur à $\lambda t$.

Dans ce mode de réalisation, les éléments de $C_\alpha$ représentent les mots clé au sens de la présente invention.

Il convient de noter que cette étape supplémentaire est optionnelle. On peut en effet se contenter d'appliquer l'étape 106 sur les mots clés $c_\alpha // \alpha$.

Puis, on applique les fonctions de hachage de la seconde famille H' sur ces mots clé, à l'étape 106.

Pour tout $\beta$ nombre entier compris entre 1 et v, et $c_e$ appartenant à $C_\alpha$, une valeur $\gamma_e$ est déterminée selon l'équation suivante :

$$\gamma_e = h'_\beta (c_e // \alpha)$$

où $c_e // \alpha$ représente une concaténation de la valeur de $c_e$ et de la valeur de $\alpha$.

Enfin, l'entité de gestion 11 met à jour les filtres de Bloom $B_1$ à $B_m$ en stockant les adresses des données biométriques $b_i$ sous leur forme cryptée $E(@b_i)$ (étape 108), pour tout i, dans les filtres correspondants $B_\gamma$, c'est-à-dire les filtres qui ont un identifiant, c'est-à-dire un indice, qui correspond au résultat de l'application des fonctions de la seconde famille de fonctions de hachage H' aux mots clé.

Par conséquent, l'adresse de $b_i$ sous une forme chiffrée est stockée dans chacun des filtres de Bloom ayant un index $\gamma_e$ qui vérifie l'équation :

$$\gamma_e = h'_\beta (c_e // \alpha)$$

ou encore, dans le cas où l'étape supplémentaire décrite ci-dessus n'est pas appliquée :

$$\gamma_\alpha = h'_\beta (c_\alpha // \alpha)$$

Après cette étape d'enrôlement, le système est prêt pour effectuer une phase d'identification sur la base des données biométriques cryptées stockées et d'une nouvelle donnée biométrique captée.

La figure 4 illustre une telle phase d'identification selon un mode de réalisation de la présente invention.

Dans cette phase d'identification, une nouvelle donnée biométrique b' est captée au niveau de l'émetteur 12. Ce dernier choisit alors un ensemble de fonctions de hachage parmi la première famille de fonctions de hachage H. Il applique les fonctions de cet ensemble H à la donnée biométrique b'. Puis, il concatène chacun des résultats ainsi obtenu à l'indice de la fonction de hachage correspondante pour générer des mots clé. Ces mots clé sont ensuite soumis à un ensemble de fonctions de la seconde famille de fonctions de hachage H' pour obtenir des mots clé hachés afin de requérir une recherche dans la base de données 10 sur la base de ces mots clé hachés.

Le principe de l'application des fonctions de hachage de la première famille H, puis de l'application des fonctions de hachage de la seconde famille H', au niveau de l'émetteur, est quasiment similaire à celui qui est appliqué au niveau de l'entité de gestion au cours de la phase d'enrôlement. Toutefois, par souci de simplification, par la suite, le résultat obtenu, c'est-à-dire les mots clé hachés, sont notés $h_{i_j}^c(b')$, pour i compris entre 1 et k , et pour j compris entre 1 et s, où k est le nombre de fonctions de hachage appliquées issues de la première famille de fonctions et s est le nombre de fonctions de hachage appliquées issues de la seconde famille de fonctions, la notation $h^c$ représentant le principe d'application des fonctions de hachage décrit ci-dessus.

Puis, au niveau de l'émetteur 12, il est calculé, pour $\alpha$ compris entre $i_1$ et $i_s$ la valeur de $h_\alpha^c(b')$ et pour au moins un desdits entier i.

Toutes ces valeurs $h_\alpha^c(b')$ sont ensuite envoyées à l'entité d'identification 13 dans un message 41

Sur la base de ces valeurs, l'entité d'identification 13 fait une requête 42 auprès de la base de données 10 de façon à récupérer des données associées aux filtres $B_u$ d'indice u, tel que u est égal aux valeurs $h_\alpha^c(b')$ reçues.

L'entité d'identification 13 reçoit ensuite la réponse 43 à cette requête 42 depuis la base de données, pour tout u égal à $h_\alpha^c(b')$.

Ainsi, à ce stade, l'entité d'identification 13 dispose des adresses des ensembles de données biométriques chiffrées qui sont proches de la donnée biométrique b'.

Alors, l'entité d'identification 13, sur la base de la clé utilisée pour crypter; peut retrouver les adresses des données biométriques stockées et les comparer entre elles.

Ensuite, elle peut avantageusement décider que, si au moins une adresse apparait dans tous les $B_u$ récupérés, les adresses obtenues sont relatives à une ou des données biométriques cryptées qui correspondent à la donnée biométrique nouvellement captée b'. Dans ce cas, l'utilisateur en cours d'identification est alors considéré comme étant identifié.

Il peut être avantageux de prévoir de restreindre l'information obtenue par l'entité d'identification 13. A cet effet, dans un mode de réalisation de la présente invention, l'entité d'identification 13 ne récupère que les adresses qui sont présentes dans un nombre minimum de Bu. Ce mode de réalisation est par exemple basé sur l'utilisation d'un schéma de partage de secret (ou 'secret sharing scheme' en anglais) tel que cela est par exemple décrit dans le document de A. Shamir, 'How to share a secret', Commun. ACM, 1979.

Dans un mode de réalisation, on peut aussi prévoir de n'utiliser que des filtres de Bloom classique, sans la caractéristique de stockage, et/ou de ne pas stocker les données biométriques chiffrées si on n'effectue pas d'étapes ultérieures dans le procédé de contrôle.

Dans le cas où il n'y a aucune adresse commune qui apparait dans tous les $B_u$ récupérés, on décide alors que l'utilisateur en cours d'identification n'a pas été identifié.

Ainsi, la recherche par mots clé dans une base de données selon la présente invention, permet d'obtenir une liste d'adresses de stockage relativement à des candidats potentiellement proches de la donnée biométrique à identifier b'.

Parfois, dans certains cas, il peut être avantageux de consolider cette liste en effectuant une vérification finale.

A cet effet, on peut prévoir de requérir, auprès de la base de données, l'envoi de données stockées auxdites adresses de la liste, afin de pouvoir effectuer une vérification sur les données biométriques récupérées et déchiffrées.

On peut à cet effet prévoir un crypto système permettant de chiffrer des bits de telle sorte qu'il soit possible de calculer de manière chiffrée un XOR (+) de deux messages m et m', à partir de messages chiffrés de m et m'.

On peut à cet effet se baser sur le schéma décrit dans le document 'Evaluating 2-DNF Formulas on Cipher-texts, Theory of Cryptography, Second Theory of Cryptography Conference' de Boneh, Goh et Nissim, LNCS3378, 2005, ou encore sur le crypto système décrit dans 'Probabilistic encryption and how to play mental poker keeping secret all partial information' de Goldwasser et Micali, ACM, 1982. Ce dernier correspond à un schéma homomorphique tel que pour un couple de clés (pk; sk) et deux messages m; m' compris dans l'ensemble {0, 1}, alors l'équation suivante est vérifiée :

$$D(E(m;\ pk) \times E(m';\ pk);\ sk) = m\ (+)\ m'$$

où E et D sont respectivement les fonctions de cryptage et de décryptage avec la clé secrète sk et la clé publique pk.

Les données biométriques b stockées dans la base de données 10 sont stockées de manière chiffrées bit à bit suivant l'équation :

$$E(b;\ pk) = (E(b_1;\ pk);\ \ldots\ ;\ E(b_n;\ pk))$$

Dans ce contexte, une étape de vérification selon un mode de réalisation de la présente invention, correspond à un calcul de distance de Hamming.

On peut alors prévoir :

- d'envoyer un message comprenant E(b'; pk) à la base de données 10 ;
- de calculer au niveau de la base de données 10 pour toute donnée biométrique b de la base de données 10 :

$$E(b; pk) \times E(b'; pk) \; ;$$

- effectuer une requête depuis l'entité d'identification 13 pour récupérer les résultats du calcul ci-dessus ;
- recevoir depuis la base de données 10 une distance de Hamming entre la donnée biométrique b et celle $b_i$ stockée à l'adresse @$b_i$ récupérée dans les filtre $B_u$, sous une forme chiffrée que l'entité d'identification 13 est en mesure de déchiffrer.

Ainsi, avantageusement, l'entité d'identification n'obtient au final qu'une distance de Hamming entre la donnée biométrique captée et un candidat de la base de données. En outre, ici, la base de données n'apprend rien relativement aux opérations effectuées.

## Revendications

1. Procédé de gestion d'une base de données (10) **caractérisée en ce que**, ladite base de données comprenant des données biométriques stockées sous forme chiffrée ainsi qu'un ensemble de filtres ($B_1$, .., $B_m$) associés respectivement à des identifiants de filtre,
ledit procédé comprend les étapes suivantes au niveau d'une entité de gestion :

   /1/ recevoir (101) une donnée biométrique ($b_i$) ;
   /2/ stocker, à une adresse donnée (@$b_i$) dans la base de données, ladite donnée biométrique sous une forme cryptée ($E(b_i)$) ;
   /3/ obtenir des mots clés à partir d'un premier ensemble de fonctions de hachage (H) et de ladite donnée biométrique, les fonctions de hachage du premier ensemble ayant chacune pour caractéristique de fournir pour des valeurs d'entrée voisines dans un espace métrique, des valeurs très voisines, préférablement une même valeur, en sortie dans un second espace métrique ;
   /4/ associer un sous ensemble de filtres d'indexation à chaque mot clé en sélectionnant, pour chaque mot clé, des filtres en fonction des identifiants de filtre respectivement associés, desdits mots clé et d'un second ensemble de fonctions de hachage (H') ; et
   /5/ associer ladite adresse donnée sous forme cryptée à chacun des filtres du sous ensemble de filtres d'indexation.

2. Procédé de gestion selon la revendication 1, dans lequel l'étape /3/ est mise en oeuvre selon les étapes suivantes :

   - obtenir des premières valeurs hachées respectives par application du premier ensemble de fonctions de hachage (H) à la donnée biométrique (b) ;
   - obtenir lesdits mots clé en combinant lesdites premières valeurs hachées respectivement avec des identifiants respectifs des fonctions de hachage du premier ensemble (H).

3. Procédé de gestion selon la revendication 1 ou 2, dans lequel l'étape /4/ est mise en oeuvre selon les étapes suivantes :

   - obtenir des secondes valeurs hachées par application du second ensemble de fonctions de hachage (H') aux mots clé respectivement ;
   - sélectionner chaque filtre du sous ensemble de filtres d'indexation auquel est associé un identifiant de filtre qui correspond auxdites secondes valeurs hachées.

4. Procédé de gestion selon l'une quelconque des revendications précédentes, dans lequel une première et une seconde famille de fonctions de hachage sont initialement déterminée, et dans lequel le premier et le second ensemble de fonctions de hachage sont une sous partie desdites première et seconde famille de fonctions de hachage respectivement.

5. Procédé de gestion selon l'une quelconque des revendications précédentes, dans lequel l'étape /4/ est mise en oeuvre en outre sur la base d'un seuil de tolérance d'erreur.

6. Procédé de gestion selon l'une quelconque des revendications précédentes, dans lequel le premier ensemble de fonctions de hachage est de type LSH, et dans le second ensemble de fonctions de hachage est de type cryptographique.

7. Procédé de gestion selon l'une quelconque des revendications précédentes, dans lequel les filtres de l'ensemble de filtres sont des filtres de Bloom.

8. Procédé d'identification de donnée biométrique dans une base de données (10) gérée selon un procédé de gestion selon l'une quelconque des revendications précédentes ; ladite base de données comprenant une structure basée sur des filtres ($B_1,...,B_m$) ;
ledit procédé comprenant les étapes suivantes au niveau d'une entité d'identification (13) qui a accès à la base de données :

/i/ recevoir une requête indiquant des mots clé hachés ;

/ii/ dans la base de données (10), déterminer des filtres associés auxdits mots clé hachés ;

/iii/ obtenir une liste d'adresses sous forme cryptée de la base de données qui sont respectivement associées auxdits filtres déterminés ;

/iv/ décider que les mots clés ont une correspondance dans la base de données, lorsqu'une même adresse de ladite liste d'adresses est associée à au moins un nombre déterminé de filtres.

9. Procédé d'identification d'une base de données selon la revendication 8, dans lequel les mots clé hachés sont reçus depuis un émetteur,

ledit émetteur ayant obtenu le mot clé haché selon les étapes suivantes :

- capter une donnée biométrique (b') ;
- obtenir des valeurs hachées par application d'un troisième ensemble de fonctions de hachage respectivement sur ladite donnée biométrique captée ;
- obtenir les mots clé en combinant lesdites premières valeurs hachées respectivement avec des identifiants respectifs des fonctions de hachage du troisième ensemble (H) ; et
- obtenir les mots clé hachés en appliquant un quatrième ensemble de fonctions de hachage audits mots clé.

10. Procédé d'identification selon la revendication 9, dans lequel les premier et troisième ensembles de fonctions de hachage sont issus d'une première famille de fonctions de hachage et les deuxième et quatrième ensembles de fonctions de hachage sont issus d'une seconde famille de fonctions de hachage.

11. Entité de gestion de base de données adaptée pour la mise en oeuvre d'un procédé de gestion de base de données selon l'une quelconque des revendications 1 à 7.

12. Entité d'identification adaptée pour la mise en oeuvre d'un procédé d'identification selon l'une quelconque des revendications 8 à 10.

13. Système d'identification comprenant une entité de gestion de base de données selon la revendication 11; une base de données (10) et une entité d'identification selon la revendication 12.

**Patentansprüche**

1. Verfahren zur Verwaltung einer Datenbank (10), die **dadurch gekennzeichnet ist, dass** die Datenbank biometrische Daten, die in verschlüsselter Form gespeichert sind, sowie eine Einheit von Filtern (B$_1$, .., B$_m$) umfasst, die jeweils Filteridentifikationsmitteln zugeordnet sind,

wobei das Verfahren in Bezug auf eine Verwaltungseinheit die folgenden Schritte umfasst:

/1/ Empfang (101) eines biometrischen Datums (b$_i$);

/2/ Speicherung des biometrischen Datums in verschlüsselter Form (E(b$_i$) unter einer vorgegebenen Adresse (@b$_i$) in der Datenbank;

/3/ Erhalt von Kennworten ausgehend von einer ersten Einheit von Hashfunktionen (H) und von dem biometrischen Datum, wobei jede der Hashfunktionen der ersten Einheit charakteristisch dafür ist, für ähnliche Eingabewerte in einem metrischen Raum als Ausgabe in einem zweiten metrischen Raum sehr ähnliche Werte, vorzugsweise einen gleichen Wert, zu liefern;

/4/ Verknüpfung einer Untereinheit von Indexationsfiltern mit jedem Kennwort durch Auswählen von Filtern für jedes Kennwort in Abhängigkeit der jeweils zugeordneten Filteridentifikationsmittel, den Kennwörtern und einer zweiten Einheit von Hashfunktionen (H'); und

/5/ Verknüpfung der vorgegebenen Adresse in verschlüsselter Form mit jedem der Filter der Untereinheit von Indexationsfiltern.

2. Verfahren zur Verwaltung nach Anspruch 1, **dadurch gekennzeichnet, dass** Schritt /3/ gemäß den folgenden Schritten umgesetzt wird:

- Erhalt von jeweiligen ersten Hashwerten durch Anwendung der ersten Einheit von Hashfunktionen (H) auf das biometrische Datum (b);
- Erhalt der Kennwörter durch Kombination der ersten Hashwerte mit den jeweils entsprechenden Identifikationsmitteln der Hashfunktionen der ersten Einheit (H).

3. Verfahren zur Verwaltung nach Anspruch 1 oder 2, **dadurch gekennzeichnet, dass** Schritt /4/ gemäß den folgenden Schritten umgesetzt wird:

- Erhalt von zweiten Hashwerten jeweils durch Anwendung der zweiten Einheit von Hashfunktionen (H') auf die Kennwörter;
- Auswahl jedes Filters der Untereinheit von Indexationsfiltern, welchem ein Filteridentifikationsmittel zugeordnet ist, das den zweiten Hashwerten entspricht.

4. Verfahren zur Verwaltung nach einem beliebigen der vorherigen Ansprüche, **dadurch gekennzeichnet, dass** eine erste und eine zweite Familie von Hashfunktionen zu Beginn bestimmt werden, und dass die erste Einheit und die zweite Einheit von Hashfunktionen jeweils ein Unterabschnitt der ersten bzw. zweiten Familie von Hashfunktionen sind.

5. Verfahren zur Verwaltung nach einem beliebigen der vorherigen Ansprüche, **dadurch gekennzeichnet, dass** Schritt /4/ außerdem auf Grundlage einer Fehlertoleranzgrenze umgesetzt wird.

6. Verwaltung nach einem beliebigen der vorherigen Ansprüche, **dadurch gekennzeichnet, dass** die erste Einheit von Hashfunktionen vom Typ LSH ist, und dass die zweite Einheit von Hashfunktionen kryptographisch ist.

7. Verfahren zur Verwaltung nach einem beliebigen der vorherigen Ansprüche, **dadurch gekennzeichnet, dass** die Filter der Filtereinheit Bloom-Filter sind.

8. Verfahren zur Identifikation eines biometrischen Datums in einer Datenbank (10), die mittels eines Verfahrens zur Verwaltung nach einem beliebigen der vorherigen Ansprüche verwaltet wird; wobei die Datenbank eine Struktur basierend auf Filtern ($B_1$, ..., $B_m$) umfasst;
wobei das Verfahren in Bezug auf eine Identifikationseinheit (13), die Zugang zu der Datenbank hat, die folgenden Schritte umfasst:

> /i/ Empfang einer Anfrage, die Hashkennwörter angibt;
> /ii/ Bestimmen der den Hashkennwörtern zugeordneten Filtern in der Datenbank (10);
> /iii/ Erhalt einer Liste von Adressen in verschlüsselter Form aus der Datenbank, die jeweils den bestimmten Filtern zugeordnet sind;
> /iv/ Entscheiden, dass die Kennwörter eine Entsprechung in der Datenbank haben, wenn eine gleiche Adresse der Liste von Adressen mindestens einer bestimmten Zahl von Filtern zugeordnet wird.

9. Verfahren zur Identifikation einer Datenbank nach Anspruch 8, **dadurch gekennzeichnet, dass** die Hashkennwörter von einem Emitter empfangen werden,
wobei der Emitter das Hashkennwort gemäß den folgenden Schritten empfangen hat:

> - Aufnahme eines biometrischen Datums (b');
> - Erhalt von Hashwerten durch Anwendung einer dritten Einheit von Hashfunktionen jeweils auf das aufgenommene biometrische Datum;
> - Erhalt der Kennwörter durch Kombination der ersten Hashwerte jeweils mit den entsprechenden Identifikationsmitteln der Hashfunktionen der dritten Einheit (H); und

> - Erhalt der Hashkennwörter durch Anwendung einer vierten Einheit von Hashfunktionen auf die Kennwörter.

10. Verfahren zur Identifikation nach Anspruch 9, **dadurch gekennzeichnet, dass** die erste Einheit und die dritte Einheit von Hashfunktionen aus einer ersten Familie von Hashfunktionen hervorgehen und dass die zweite Einheit und die vierte Einheit von Hashfunktionen aus einer zweiten Familie von Hashfunktionen hervorgehen.

11. Einheit zur Verwaltung von Datenbanken, die geeignet ist, ein Verfahren zur Verwaltung von Datenbanken nach einem beliebigen der Ansprüche 1 bis 7 umzusetzen.

12. Identifikationseinheit, die geeignet ist, ein Verfahren zur Identifikation nach einem beliebigen der Ansprüche 8 bis 10 umzusetzen.

13. Identifikationssystem umfassend eine Einheit zur Verwaltung von Datenbanken nach Anspruch 11; eine Datenbank (10) und eine Identifikationseinheit nach Anspruch 12.

**Claims**

1. A management process for a database (10) comprising biometric data stored in encrypted form,
said database comprising a set of filters ($B_1$, ..., $B_m$) respectively associated with filter identifiers;
wherein said process comprises the following steps at a management unit:

> /1/ receiving (101) a biometric data item ($b_i$);
> /2/ storing, at a given address ($@b_i$) in the database, said biometric data item in encrypted form ($E(b_i)$);
> /3/ obtaining keywords based on a first set of hash functions (H) and on said biometric data item, the hash functions of the first set each having the property, for input values that are neighbors in a metric space, of providing very similar values and preferably the same value as output in a second metric space;
> /4/ associating a subset of indexing filters with each keyword by selecting filters for each keyword as a function of the respectively associated filter identifiers, of said keywords, and of a second set of hash functions (H'); and
> /5/ associating said given address in encrypted form with each of the filters in the subset of indexing filters.

2. A management process according to claim 1, wherein step /3/ is implemented by the following steps:

- obtaining respective first hash values by applying the first set of hash functions (H) to the biometric data item (b);
- obtaining said keywords by respectively combining said first hash values with respective identifiers of the hash functions in the first set (H).

3. A management process according to either of claims 1 or 2, wherein step /4/ is implemented by the following steps:

- obtaining second hash values by respectively applying the second set of hash functions (H') to the keywords;
- selecting each filter from the subset of indexing filters with which is associated a filter identifier which corresponds to said second hash values.

4. A management process according to any one of the above claims, wherein a first family and a second family of hash functions are initially determined, and wherein the first set and the second set of hash functions are respectively a subpart of said first family and second family of hash functions.

5. A management process according to any one of the above claims, wherein step /4/ is also implemented on the basis of an error limit.

6. A management process according to any one of the above claims, wherein the first set of hash functions is of the LSH type and the second set of hash functions is of the cryptographic type.

7. A management process according to any one of the above claims, wherein the filters in the set of filters are Bloom filters.

8. An identification process for identifying biometric data in a database (10) managed by a management process according to any one of the above claims, said database comprising a structure based on filters $(B_1, ..., B_m)$;

wherein said process comprises the following steps at an identification unit (13) which has access to the database;

/i/ receiving a query indicating hashed keywords;
/ii/ in the database (10), determining filters associated with said hashed keywords;
/iii/ obtaining a list of database addresses in encrypted form which are respectively associated with said determined filters;
/iv/ deciding that the keywords have a correspondence in the database, when a same address in said list of addresses is associated with at least a determined number of filters.

9. An identification process for a database according to claim 8, wherein the hashed keywords are received from a transmitter, said transmitter having obtained the hashed keyword by the following steps:

- capturing a biometric data item (b');
- obtaining hash values by respectively applying a third set of hash functions to said captured biometric data item;
- obtaining the keywords by respectively combining said first hash values with respective identifiers of hash functions in the third set (H); and
- obtaining hashed keywords by applying a fourth set of hash functions to said keywords.

10. An identification process according to claim 9, wherein the first and third sets of hash functions come from a first family of hash functions and the second and fourth sets of hash functions come from a second family of hash functions.

11. A database management unit adapted to implement a database management process according to any one of claims 1 to 7.

12. An identification unit adapted to implement an identification process according to any one of claims 8 to 10.

13. An identification system comprising a database management unit according to claim 11, a database (10), and an identification unit according to claim 12.

FIG.1.

FIG.2.

FIG.3.

FIG.4.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. BONEH ; G. DI CRESCENZO ; R. OSTROVSKY ; G. PERSIANO.** Public Key Encryption with Keyword Search. *EUROCRYPT,* 2004
- **P. INDYK ; R. MOTWANI.** Approximate Nearest Neighbors: Towards Removing the Curse of Dimensionality. *STOC,* 1998
- Public key encryption that allows PIR queries. **DE D. BONEH ; E. KUSHILEVITZ ; R. OSTROVSKY.** CRYPTO. Springer, 2007, vol. 4622, 50-67
- **DE P. INDYK ; R. MOTWANI.** Approximate nearest neighbors :Towards removing the cruse of dimensionality. *STOC,* 1998

- **DE TAHER EL GAMAL.** A public key cryptosystem and a signature scheme based on discrete logarithms. *CRYPTO,* 1984, 10-18
- **DE BENNY CHOR ; EYAL KUSHILEVITZ ; ODED GOLDREICH ; MADHU SUDAN.** Private information retrieval. *J. ACM,* 1998, vol. 45, 965-981
- **DE BONEH ; GOH ; NISSIM.** Evaluating 2-DNF Formulas on Cipher-texts, Theory of Cryptography, Second Theory of Cryptography Conference. *LNCS3378,* 2005
- **DE GOLDWASSER ET MICALI.** Probabilistic encryption and how to play mental poker keeping secret all partial information. ACM, 1982